Europäisches Patentamt

European Patent Office

Office européen des brevets

(11) Veröffentlichungsnummer: **0 189 844**
**A2**

(12) # EUROPÄISCHE PATENTANMELDUNG

(21) Anmeldenummer: 86100887.8

(22) Anmeldetag: 23.01.86

(51) Int. Cl.⁴: **B 27 K 3/50**
A 01 N 43/52
//(A01N43/52, 43:40, 41:06,
41:04, 33:12)

(30) Priorität: 30.01.85 DE 3502939

(43) Veröffentlichungstag der Anmeldung:
06.08.86 Patentblatt 86/32

(84) Benannte Vertragsstaaten:
AT BE CH DE FR GB IT LI NL SE

(71) Anmelder: Dr. Wolman GmbH
Dr.-Wolman-Strasse 31-33
D-7573 Sinzheim(DE)

(72) Erfinder: Marx, Hans-Norbert
Mozartweg 8
D-7580 Buehl-Weitenung(DE)

(72) Erfinder: Pommer, Ernst-Heinrich, Dr.
Berliner Platz 7
D-6703 Limburgerhof(DE)

(72) Erfinder: Mendera, Peter
Fichtenstrasse 4
D-7507 Pfinztal(DE)

(74) Vertreter: Schweiss, Werner, Dr. et al,
BASF Aktiengesellschaft Patentabteilung
Carl-Bosch-Strasse 38
D-6700 Ludwigshafen(DE)

(54) Fungizides Mittel.

(57) Fungizide Mischung, enthaltend ein wasserlösliches Salz des 2-(Methoxycarbonylamino)-benzimidazols und ein wasserlösliches Salz einer quaternären Ammoniumverbindung sowie Verfahren zum Schutz von Holz mit dieser Mischung.

EP 0 189 844 A2

## Fungizides Mittel

Die vorliegende Erfindung betrifft wasserlösliche, fungizide Mittel für den Schutz von Holz. Die Mittel eignen sich insbesondere zum Schutz von Nutzholz, speziell von Schnittholz.

Es ist bekannt, daß Salze von 2-(Methoxy-carbonylamino)-benzimidazol (BCM) mit Sulfonsäuren (z.B. Sulfaminsäure oder 4-Phenolsulfonsäure) fungizid wirksam sind (DE-3 128 575.3).

Es ist ferner bekannt, quaternäre Ammoniumsalze beispielsweise das N-Myristyl-N,N-dimethyl-N-benzylammoniumchlorid (Prospekt der Lonza AG, BARQUAT® MS-100), das N-Cetylpyridiniumchlorid (Römpp, Chemie-Lexicon, 6. Auflage, 1966, Spalte 996) oder das $N-C_{12}-C_{14}$-Alkyl-N,N-dimethyl-N-benzylammoniumchlorid (Wallhäuser, Sterilisation-Desinfektion-Konservierung, Georg Thieme Verlag, Stuttgart, 1978, Seite 359) als Fungizid zu verwenden.

Ihre Wirkungen sind jedoch unbefriedignd, weil bei ihrer Anwendung eine hohe Konzentration der Wirkstoffe benötigt wird.

Es wurde nun gefunden, daß Mischungen aus a) einem wasserlöslichen Salz des 2-(Methoxy-carbonylamino)-benzimidazols (BCM) mit einer Sulfonsäure und b) einem wasserlöslichen Salz einer quaternären Ammonium-Verbindung, insbesondere einer Verbindung der Formel

$$\left[ \begin{array}{c} R^1 \\ | \\ R-N-R^2 \\ | \\ R^3 \end{array} \right]^{(+)} \qquad Z^{(-)}$$

in der

R     einen Alkylrest mit 8 bis 20 Kohlenstoffatomen, einen Alkenylrest mit 12 bis 20 Kohlenstoffatomen oder einen Benzylrest bedeutet, der gegebenenfalls durch $C_1-C_{20}$-Alkyl oder Halogen substituiert ist,

$R^1$     $C_1-C_6$-Alkyl,

$R^2$     $C_1-C_6$-Alkyl,

$R^3$     Methyl oder $C_8-C_{18}$-Alkyl,

oder $R^1$, $R^2$ und $R^3$ zusammen mit dem N einen heterocyclische Rest bilden, der 4 bis 5 C-Atome, 1 bis 2 N-Atome und eine oder 2 Dopelbindungen enthält, wobei die Kohlenstoffatome gegebenenfalls durch $C_1-C_4$-Alkyl oder Halogen substituiert sind, und

Z     einen Säurerest bedeutet,

eine bessere fungizide Wirkung als die Einzelwirkstoffe haben.

Ein wasserlösliches Salz des BCM mit einer Sulfonsäure ist z.B. das Salz mit Sulfaminsäure oder 4-Phenolsulfonsäure.

Ein Alkylrest mit 8 bis 20 Kohlenstoffatomen ist beispielsweise Octyl, Nonyl, Decyl, Myristyl ($C_{14}$), Cetyl ($C_{16}$). Ein Alkenylrest mit 12 bis 20 Kohlenstoffatomen ist beispielsweise der Oleylrest. $C_1$-$C_{20}$-Alkyl ist beisielsweise $C_1$-$C_4$-Alkyl, z.B. Methyl, Ethyl, Propyl. Halogen ist beispielsweise Chlor oder Brom.

$C_1$-$C_6$-Alkyl ist beispielsweise Methyl, Ethyl, Propyl.

$C_8$-$C_{18}$-Alkyl ist beispielsweise Octyl, Nonyl, Decyl, Myristyl ($C_{14}$), Cetyl ($C_{16}$).

Ein heterocyclischer Rest ist beispielsweise ein aromatischer, stickstoffhaltiger Rest mit 6 Ringgliedern, z.B. der Pyridinrest. Geeignete quaternäre Ammoniumsalze sind z.B. Trimethylcocoammoniumchlorid, Trimethylhexadecylammoniumchlorid, Trimethyloleylammoniumchlorid, Trimethyltalg- und Dimethyldicocoammoniumchlorid (1:1), Trimethyloleyl- und Dimethyldicocoammoniumchlorid (1:1), Dimethyldicocoammoniumchlorid, Dimethyltalgbenzylammoniumchlorid, Dimethylcocobenzylammoniumchlorid, Dimethyldialkyl-(25 % $C_8C_8$, 50 % $C_8C_{10}$, 25 % $C_{10}C_{10}$)-ammoniumchlorid, Dimethyldidecyl-($C_{10}C_{10}$)-ammoniumchlorid, Dimethyldialkyl-(25 % $C_{12}$, 60 % $C_{14}$, 15 % $C_{16}$)-ammoniumchlorid, Dimethyllauryl-(64 % $C_{12}$, 30 % $C_{14}$, 6 % $C_{16}$)-benzylammoniumchlorid, Dimethylalkyl-($C_{12}C_{14}$)-$C_{14}$-dichlorbenzylammoniumchlorid, 1,1'-Dimethyl-4,4'-bipyridiniumdichlorid, Myristyldimethylbenzylammoniumchlorid und Cetylpyridiniumchlorid.

Da die fungizide Wirkung der Salze durch das Kation bedingt wird ist die Wahl des Säurerestes Z beliebig.

Ein Säurerest ist beispielsweise der Rest einer wasserlöslichen Säure z.B. der Salzsäure, Bromwasserstoffsäure, Schwefelsäure, Salpetersäure, Essigsäure, Propionsäure.

Das Mischungsverhältnis BCM-Salz:quaternäres Salz ist beispielsweise 1:5 bis 5:1, insbesondere 1:3 bis 3:1, vorzugsweise 1:1 Gewichtsteile.

Wäßrige Lösungen enthalten z.B. zwischen 0,1 und 3 Gew.% Wirkstoffmischung, vorzugsweise 0,5 bis 1,5 % Wirkstoffmischung.

Die Mischung enthält beispielsweise 15 bis 90 Gew.%, vorzugsweise 30 bis 50 Gew.% quaternäres Ammoniumsalz bezogen auf die Gesamtwirkstoffmenge.

Die Anwendung zum Schutz von Holz kann z.B. erfolgen:

a) durch Besprühen des Holzes mit der Lösung

b) durch Tauchen des Holzes in die Lösung

c) durch Kesseldrucktränkung des Holzes

d) durch Streichen des Holzes.

Bei Holzfolgeprodukten, z.B. Holzschnitt, Zellstoff, sowie weiteren technischen Produkten, die einem Pilz- und/oer Bakterienbefall zugänglich sind, z.B. Zwischenprodukten bei der Papierherstellung, ist die Applikation den technischen Möglichkeiten anzupassen.

Die Wirksamkeit der Fungizide im Bereich des Holzschutzes erstreckt sich beispielsweise auf:

a) Schimmelpilze (z.B. Aspergillus niger)

b) Moderfäulepilze (z.B. Chaetomium globosum)

c) Bläuepilze (z.B. Pullularia pullulans)

d) holzzerstörende Pilze (z.B. Serpula lacrymans).

Die Anwendung zum Schutz von Holz zeigt überraschende Vorteile.

1) Die Lösung dringt gut in das Holz oder die Holzfolgeprodukte ein.

2) Durch die Lösung tritt keine Quellung des Holzes auf, welche die Eindringung der wäßrigen Lösung in das Holz vermindern würde.

Testverfahren

Testhölzer aus Kiefernsplintholz mit den Abmessungen von 200 x 50 x 15 mm wurden gewogen, für 20 Sekunden in die zu untersuchende Lösung getaucht und danach erneut gewogen. Die Kontrollhölzer wurden in reines Wasser getaucht. Mit den einzelnen Testlösungen wurden jeweils parallel 10 Musterbretter in der oben beschriebenen Weise imprägniert und danach unter normalen Klimabedingungen 24 Stunden zwischengelagert.

Als Testgelände wurde eine schattige Wiese ausgewählt, deren Rasen vor dem Auslegen der Testhölzer kurzgeschnitten wurde. Die Testhölzer wurden auf 2 Kunststoffschienen in einer Höhe von ca. 1 cm über dem Rasen ausgelegt. Die der äußeren Bewitterung (Regen) ausgesetzten Testbretter wurden nach 4 und 6 Monaten geprüft. Die fungizide Wirkung wurde aufgrund der aufgetretenen Verfärbungen und Veränderungen der Holzoberfläche nach 4 Kategorien klassifiziert:

3 - kein Bewuchs
2 - leichter punktueller Bewuchs
1 - stärkerer punktueller Bewuchs
0 - großflächig bis vollständig bewachsen.

Bei der Bewertung wurde zwischen folgenden Befallarten unterschieden:

x    -    Bläuepilze auf der Oberseite der Testbretter (Auswaschung durch Regen)

y    -    Basidiomyceten auf der Rückseite der Bretter (ohne Auswaschung durch Regen).

Als Wirkstoffe wurden das BCM-Salz der Sulfaminsäure (A) und Myristyldimethylbenzylammoniumchlorid (B) für den Test ausgewählt.

Als Beispiele 1 bis 3 wurden Mischungen der beiden Ausgangswirkstoffe in den Relationen von 1:3 (1), 1:1 (2) und 3:1 (3) (Gewichtsteile) für die Versuchsreihe verwendet.

Die Ergebnisse des Freilandversuches wurden in der nachstehenden Tabelle festgehalten, wobei die Spalten 1 und 2 sich auf die Testergebnisse der Ausgangsprodukte und die der Spalten 3 bis 5 auf die Mischungen 1 bis 3 beziehen.

Die in Klammern angeführten Zahlen sind die Werte der fungiziden Wirkungen der Einzelwirkstoffe.

Die Tabelle berücksichtigt die Auswertung der Bewitterungsergebnisse nach 4 und 6 Monaten, da nach diesem Zeitraum die einzelnen Musterbretter erkennbare Unterschiede des Pilzbewuchses zeigten.

Neben dem Hauptversuch wurden weitere erfindungsgemäße Mischungen mit jeweils nur 2 Musterbrettern in den Test einbezogen:

Beispiele 4 bis 6

BCM Sulfaminsäuresalz + Cetylpyridiniumchlorid in einer Relation von 3:1 (4), 1:1 (5) und 1:3 (6);

Beispiele 7 bis 9

BCM 4-Phenylsulfonsäuresalz + Myristyldimethylbenzylammoniumchlorid in
einer Relation von 3:1 (7), 1:1 (8) und 1:3 (9);

Beispiel 10

BCM 4-Phenolsulfonsäuresalz + Cetylpyridiniumchlorid + Myristyldimethylbenzylammoniumchlorid in einer Relation von 2:1:1.

Alle diese Beispiele sollen die Erfindung erläutern, ohne jedoch ihren
Geltungsbereich einzuschränken. Die Bewitterungsergebnisse der Beispiele 4 bis 10 stimmen weitgehend mit den Ergebnissen der in den Haupttest einbezogenen Beispiele 1 bis 3 überein.

Wie die Ergebnisse dieses Freilandtests zeigen, haben die erfindungsgemäße Salzlösungen insbesondere einer Konzentration von 1,00 Gew.% eine
gute Wirksamkeit, sowohl gegen holzverfärbende wie auch holzzerstörende
Pilze. Die Ausgangskomponenten zeigen dagegen auch bei einer doppelt so
hohen Konzentration noch immer Schwachstellen in ihrer fungiziden Wirkung.

Aufgrund dieser Ergebnisse können die erfindungsgemäßen Salzmischungen
insbesondere bei einer Konzentration von 1 Gew.% und höher beispielsweise
zum vorbeugenden, temporären Schutz von Nutzholz verwendet werden.

Je nach Anforderungen der einzelnen Einsatzbereiche besteht auch die Möglichkeit, die erfindungsgemäßen Salzmischungen mit anderen wasserlöslichen oder wasseremulgierbaren Fungiziden, z.B. mit Organozinnverbindungen
oder 2,5-Dimethylfuran-3-carbonsäure-N-methoxy-N-cyclohexylamid zu kombinieren.

Tabelle

Freilandbewitterung von Kiefernsplintholz frisch – Außenlagerung (10 Prallelen)

| Wirkstoff | BCM Salz (A) | | | | quat. Salz (B) | | | | A:B = 1:3 | | | | A:B = 1:1 | | | | A:B 0 3:1 | | | |
|---|---|---|---|---|---|---|---|---|---|---|---|---|---|---|---|---|---|---|---|---|
| Testzeit (Monate) | 4 | | 6 | | 4 | | 6 | | 4 | | 6 | | 4 | | 6 | | 4 | | 6 | |
| Befallart | X | Y | X | Y | X | Y | X | Y | X | Y | X | Y | X | Y | X | Y | X | Y | X | Y |
| Wirrkstoffkonz. (Gew.%) | | | | | | | | | | | | | | | | | | | | |
| 0,25 | 1 | 2 | 1 | 1 | 0 | 1 | 0 | 0 | 2 | 2 | 1 | 2 | 2 | | 3 | | 2 | | 3 | |
| | | | | | | | | | | | | | 2 | | 2 | | 2 | | 2 | |
| 0,50 | 1 | 2 | 1 | 1 | 0 | 2 | 0 | 2 | 2 | 3 | 2 | 2 | 3 (1+0) | 3 | (2+1) 3 | (1+0) 3 | (1+0) | | 2 | 3 | 2 | 3 |
| 1,00 | 2 | 2 | 1 | 1 | 0 | 3 | 0 | 2 | 3 | 3 | 2 | 3 | 3 (1+0) | 3 | (2+2) 3 | (1+0) 3 | (1+2) | | 3 | 2 | 3 | 3 |
| 2,00 | 2 | 2 | 1 | 1 | 0 | 3 | 0 | 3 | 3 | 3 | 3 | 3 | 3 (2+0) | 3 | (2+3) 3 | (1+0) 3 | (1+2) | | 3 | 3 | 3 | 3 |

## Patentansprüche

1. Fungizides Mittel zum Schutz von Holz, dadurch gekennzeichnet, daß es eine Mischung aus a) einem wasserlöslichen Salz des 2-(Methoxy-carbonylamino)-benzimidazols mit einer Sulfonsäure, und b) einem wasserlöslichen Salz einer quaternären Ammoniumverbindung enthält.

2. Fungizides Mittel nach Anspruch 1, dadurch gekennzeichnet, daß die Sulfonsäure die Sulfaminsäure oder die 4-Phenolsulfonsäure ist.

3. Fungizides Mittel nach Anspruch 1, dadurch gekennzeichnet, daß das wasserlösliche Salz der quaternären Ammoniumverbindung die Formel

$$\left[\begin{array}{c} R^1 \\ | \\ R-N-R^2 \\ | \\ R^3 \end{array}\right]^{(+)} \qquad Z^{(-)}$$

hat, in der

R einen Alkylrest mit 8 bis 20 Kohlenstoffatomen, einen Alkenylrest mit 12 bis 20 Kohlenstoffatomen oder einen Benzylrest bedeutet, der gegebenenfalls durch $C_1$-$C_{20}$-Alkyl oder Halogen substituiert ist,

$R^1$ $C_1$-$C_8$-Alkyl,

$R^2$ $C_1$-$C_8$-Alkyl,

$R^3$ Methyl oder $C_8$-$C_{18}$-Alkyl

oder $R^1$, $R^2$ und $R^3$ zusammen mit dem N einen heterocyclischen Rest bilden, der 4 bis 5 C-Atome, 1 bis 2 N-Atome und eine oder 2 Doppelbindungen enthält, wobei die Kohlenstoffatome gegebenenfalls durch $C_1$-$C_4$-Alkyl oder Halogen substituiert sind, und

Z einen Säurerest bedeutet.

4. Fungizides Mittel nach Anspruch 1, dadurch gekennzeichnet, daß es als quaternäres Ammoniumsalz Myristyldimethylbenzylammoniumchlorid, Cetylpyridiniumchlorid oder Dimethylbipyridiniumchlorid enthält.

5. Fungizides Mittel nach Anspruch 1, dadurch gekennzeichnet, daß die Mischung 15 bis 90 Gew.% quaternäres Ammoniumsalz bezogen auf die Gesamtwirkstoffmenge, enthält.

6. Fungizides Mittel nach Anspruch 1, dadurch gekennzeichnet, daß es in Form einer wäßrigen Lösung vorliegt.

7. Verfahren zum Schutz von Holz, dadurch gekennzeichnet, daß man das Holz mit einer wäßrigen Lösung des fungiziden Mittels gemäß Anspruch 1 behandelt.